# EUROPÄISCHE PATENTANMELDUNG

(11) **EP 0 542 025 A1**
(43) Veröffentlichungstag der Anmeldung: **19.05.1993**
(21) Anmeldenummer: 92118312.5
(22) Anmeldetag: 27.10.1992
(51) Int. Cl.: B29C 49/24, B29C 49/62, B29C 37/00

(54) **Verfahren zum Versehen eines Behälters mit einer Innenauskleidung**

(30) Priorität: 14.11.1991 DE 4137449
(71) Anmelder: Krupp Kautex Maschinenbau GmbH, D-53229 Bonn (DE)
(72) Erfinder: Daubenbüchel, Werner, W-5060 Bergisch-Gladbach (DE); Kiefer, Erich, W-5300 Bonn 3 (DE); Klüsener, Peter, W-5300 Bonn 2 (DE)
(74) Vertreter: Koepsell, Helmut, Dipl.-Ing.

(57) **Zusammenfassung**

Die Erfindung betrifft ein Verfahren zum Anbringen einer dünnwandigen Innenauskleidung (14) an einem Behälter (32) sowie einen nach diesem Verfahren hergestellten Behälter. Bei dem Verfahren wird in den Behälter mit dessen Öffnung ein warmplastischer Vorformling aus thermoplastischem Material eingebracht und unter Anwendung innerem Überdrucks bis zur Anlage an der Innenfläche der Wandung des Behälters aufgeweitet, wobei insbesondere aus dem an den Boden angrenzenden Raum zwischen Behälterwandung und Vorformling über eine durch die Öffnung des Behälters in diesen eingeführte Leitung Luft abgeführt wird, solange der Vorformling bzw. die daraus sich bildende Innenauskleidung noch plastisch verformbar ist.

## Beschreibung

Die Erfindung betrifft ein Verfahren zum Versehen eines Behälters mit einer inneren Auskleidung sowie einen unter Anwendung dieses Verfahrens hergestellten Behälter.

Es ist beispielsweise durch die US-PS 3,816,578 bekannt, derartige Innenauskleidungen aus thermoplastischem Material im Extrusions-Blasverfahren an Behältern, deren Wandung luftdicht ausgebildet ist, anzubringen. Dabei wird so verfahren, daß zunächst aus einer Extrusionseinrichtung ein unten verschlossener Vorformling in den äußeren Behälter hinein extrudiert und bis zur Anlage an der Wandung des Außenbehälters durch inneren Überdruck aufgeweitet wird. Um die zwischen Vorformling und Behälterwandung vorhandene Luft nach außen durch die einzige Öffnung des Behälters vollständig zu verdrängen, wird die Extrusionsvorrichtung mit der ringförmigen Austrittsöffnung, durch welche der Vorformling austritt, zunächst bis kurz über den Boden des Innenbehälters abgesenkt und dann im Zuge der Extrusion des Vorformlings, der dabei gleichzeitig aufgeweitet wird, nach oben aus dem Behälter heraus bewegt. Auf diese Weise soll erreicht werden, daß der aufgeweitete Vorformling sich an die Innenwandung des Behälters anlegt, ohne daß Lufteinschlüsse zwischen der Wandung des Behälters und der Auskleidung verbleiben. Diese Art der Verfahrensführung ist einigermaßen umständlich. Trotzdem wird der angestrebte Effekt des Vermeidens von Lufteinschlüssen nur dann erreicht werden können, wenn die Innenkontur des Behälters bestimmte Voraussetzungen erfüllt.

Die EP-A2-0189750 offenbart ebenfalls ein Verfahren zum Anbringen einer Auskleidung in einem Behälter unter Anwendung des Extrusions-Blasverfahrens. Dabei soll eine vollständige Verdrängung der Luft in dem Bereich zwischen Wandung des Behälters und Vorformling bzw. daraus entstehender Auskleidung dadurch erreicht werden, daß der dem Boden des Behälters zugekehrte Abschnitt des Vorformlings mit einer geringeren Wandstärke hergestellt wird. Dies soll zu einem kontrollierten Aufweiten des Vorformlings führen derart, daS der Abschnitt geringerer Wandstärke zuerst aufgeweitet wird und dabei die in dem der Öffnung des Behälters abgekehrten Bereich desselben vorhandene Luft in Richtung auf die Öffnung des Behälters verdrängt. Ob durch die vorbeschriebene Ausgestaltung der Wandstärke des Vorformlings der angestrebte Effekt erreicht wird, ist zumindest zweifelhaft, da die Verformbarkeit nicht nur von der Wandstärke, sondern u. a. auch von der Temperatur des Vorformlings abhängt. Nachteilig ist in jedem Fall, daß der Vorformling die geringere Wandstärke gerade in jenem Bereich erhält, in welchem er bei Behältern, beispielsweise Fässern, mit normaler Innenkontur am stärksten aufgeweitet und demzufolge auch am stärksten gedehnt wird. Da bestimmte Mindestwandstärken der fertigen Auskleidung nicht unterschritten werden dürfen, hat die vorbeschriebene Ausgestaltung des Vorformlings bezüglich seiner Wandstärke den Nachteil zur Folge, daß in den dem Boden des Behälters abgekehrten Bereichen mehr Material für die Auskleidung verwendet werden muß als für deren Funktion erforderlich ist. Trotzdem können bei dieser Verfahrensweise Lufteinschlüsse zwischen Wandung des Behälters und Auskleidung nicht mit der erforderlichen Sicherheit ausgeschlossen werden.

Demzufolge liegt der Erfindung die Aufgabe zugrunde, das Verfahren der einleitend beschriebenen Art so abzuwandeln, daß mit einer ausreichend weiten Öffnung versehene Behälter auch bei ungünstiger Kontur unter Anwendung des Blasverfahrens mit einer Auskleidung versehen werden können, ohne daß störende Lufteinschlüsse zwischen Behälterwandung und fertiger Auskleidung vorhanden sind. Das Verfahren und die dazu benutzte Vorrichtung sollen einfach und wenig aufwendig sein, so daß die Möglichkeit besteht, das Verfahren gemäß der Erfindung auch in einem Abfüllbetrieb zu verwenden, um beispielsweise einen Behälter unmittelbar vor dem Füllvorgang mit einer Auskleidung zu versehen. Eine derartige Handhabung bietet sich insbesondere dann an, wenn der Behälter mehrfach verwendet und vor jedem Füllvorgang mit einer neuen Auskleidung versehen wird. Dies setzt voraus, daß die Auskleidung nach Benutzung ohne große Schwierigkeiten aus dem Behälter wieder entfernt werden kann.

Diese Aufgabe wird unter Anwendung der Lehre des Anspruches 1 gelöst. Wie dabei im einzelnen verfahren wird, kann von den Umständen des jeweiligen Einzelfalles abhängen. So kann das Druckgefälle durch das Aufweiten des Vorformlings innerhalb des Behälters entstehen, welches dazu führt, daß die in dem Raum zwischen Behälterwandung und Vorformling befindliche Luft verdrängt und dadurch unter einen gewissen Überdruck gebracht wird. Es ist auch möglich, ggf. zusätzlich, die Leitung mit einer Unterdruckquelle zu verbinden, so daß die in dem vorerwähnten Raum befindliche Luft aus diesem abgesaugt wird. Welche der Möglichkeiten zur Anwendung kommt, wird insbesondere von der Größe und der Form des auszukleidenden Behälters abhängen. So sind Konfigurationen des Innenraumes bzw. der diesen begrenzenden Wandung des Behälters denkbar, bei denen ohne Absaugung von außen bestimmte Bereiche des zwischen Behälterwandung und Vorformling befindlichen Raumes durch den expandierenden Vorformling so abgeschlossen werden, daß die in ihnen enthaltene Luft ohne zusätzliche Absaugung nicht entweichen kann. Es ist auch möglich, bei - ggf. zusätzlicher - Anwendung einer durch Unterdruck erzeugten Saugwirkung die Expansion des Vorformlings innerhalb bestimmter Grenzen zu steuern. Die - ggf. zusätzliche - Anwendung von Unterdruck hat auch den Vorteil, daß der zur Verursachung des Druckgefälles erforderliche Überdruck innerhalb des Behälters so niedrig gehalten werden kann, daß es auch bei einem verhältnismäßig dünnwandigen Behälter nicht erforderlich ist, den Behälter außenseitig zum Abfangen der durch den inneren Überdruck verursachten, nach außen gerichteten Kräfte abzustützen.

Bei Anwendung des Absaugens durch Anlegen von Unterdruck ist es möglich, diesen bereits während des Einführens des Vorformlings in den Behälter wirksam werden zu lassen. Andererseits besteht auch die Möglichkeit, daß der Vorformling bereits während des Einführens in den Behälter unter innerem Überdruck steht und ggf. eine Voraufweitung erfährt, in deren Verlauf der Vorformling mit Teilen der ihn bildenden Wandung mit Teilen der Innenwandung des Behälters in Kontakt kommt. Es kann zweckmäßig sein, den Unterdruck insbesondere in dem dem Boden des Behälters zugekehrten Raum zwischen Behälterwandung und Vorformling anzulegen, nachdem der Vorformling seine Voraufweitung erfahren hat. Dabei kann der Vorgang z. B. so ablaufen, daß der Vorformling in einem Abstand vom Bodenbereich des Behälters mit dessen Seitenwandung in Berührung kommt, worauf die zwischen dem Bodenbereich und dem Bereich, in welchem der Vorformling an der Innenfläche des Behälters anliegt, vorhandene Luft zwischen Vorformling und Innenbehälter abgesaugt wird, bis die Auskleidung auch in diesem Bereich an der inneren Wandung des Behälters anliegt. Entsprechendes gilt auch dann, wenn die in dem Raum zwischen Vorformling und Wandung des Innenbehälters befindliche Luft nicht abgesaugt wird, sondern aufgrund des durch das Aufweiten des Vorformlings bewirkten Überdrucks in diesem Raum durch die Leitung hindurch nach außen gedrückt wird. Unabhängig davon, wie das Druckgefälle bewirkt wird, sollte die Eintrittsöffnung der Leitung für die abzuführende Luft innerhalb des Raumes zwischen Vorformling und Behälterwandung so positioniert sein, daß die im Bereich der Eintrittsöffnung befindliche Luft erst in der letzten Phase des Aufweitvorganges in die Leitung verdrängt wird. Auf diese Weise kann erreicht werden, daß auch ohne Anwendung von Unterdruck die in dem Raum zwischen Vorformling und Wandung des Behälters befindliche Luft vollständig verdrängt und somit die Innenauskleidung überall dicht zur Anlage an der Innenfläche des Behälters gebracht wird, und zwar auch dann, wenn dieser, beispielsweise am Übergang zwischen innerer Mantelfläche und innerer Bodenfläche, kompliziert ausgebildet oder beispielsweise mit scharfkantigen oder rechtwinkligen Übergängen versehen ist. In Abhängigkeit gerade von der Ausgestaltung solcher Übergänge kann es unter Umständen aber auch geboten sein, die Luft im Raum zwischen Vorformling und Behälterwandung abzusaugen.

Im übrigen kann so vorgegangen werden, daß in den Behälter wenigstens eine Rohr- oder Schlauchleitung geringen Durchmessers eingelegt wird, die sich durch die Öffnung des Behälters bis zumindest in den Bereich hinein erstreckt, an welchem der Vorformling während des Voraufweitens mit der inneren Mantelfläche des Behälters in Berührung kommt. Bei dieser Rohrleitung wird es sich im allgemeinen um einen mehr oder weniger flexiblen Schlauch handeln, der unmittelbar an der Innenfläche des Behälters entlang verläuft, ggf. an dieser leicht angeheftet ist.

Es ist bei Anwendung der Lehre gemäß der Erfindung ohne weiteres möglich, den Vorformling von außen durch die Öffnung des Behälters in diesen hinein zu extrudieren. D. h., daß der Extrusionskopf außerhalb des Behälters oberhalb der Öffnung desselben stationär angeordnet sein kann. Es besteht natürlich auch die Möglichkeit, den Vorformling zunächst herzustellen und dann unter Verwendung eines zusätzlichen Mittels, beispielsweise eines Greifers, der den Vorformling an seinem oberen Ende erfaßt, in den Behälter einzubringen. Andererseits ist auch eine Handhabung möglich, bei welcher der Extrusionskopf bzw. der die Austrittsöffnung desselben tragende Teil in den Behälter eingefahren wird, wenngleich ein Vorteil der Erfindung darin besteht, daß dies im allgemeinen nicht erforderlich ist.

Gemäß einem weiteren Vorschlag der Erfindung kann so verfahren werden, daß mit zunehmender Evakuierung des zwischen Behälterwandung und Vorformling befindlichen Raumes oder ggf. auch nach Erreichen der vollständigen Anlage des aufgeweiteten Vorformlings an der Innenfläche des Behälters die wenigstens eine Leitung aus dem Behälter herausgezogen wird. Dazu ist lediglich erforderlich, daß das Zustandekommen einer festen Verbindung zwischen Leitung und aufgeweitetem Vorformling vermieden wird. Im allgemeinen wird der Wärmeinhalt der normalerweise sehr dünnwandigen Auskleidung selbst dann nicht ausreichen, z. B. eine Schweißverbindung mit der Leitung zu bewirken, wenn beide Teile, also Vorformling bzw. daraus herzustellende Auskleidung einerseits und Leitung andererseits aus Materialien bestehen, die miteinander verschweißbar sind. Ein Anhaften des aufgeweiteten Vorformlings an der Leitung kann aber in jedem Fall durch entsprechende Werkstoffwahl oder beispielsweise entsprechende Bearbeitung oder Ausgestaltung jenes Teils der Oberfläche der Leitung erreicht werden, die mit dem aufgeweiteten Vorformling in Berührung kommt. Beim Herausziehen der Leitung aus dem Bereich zwischen Wandung des Behälters und dem zur Auskleidung vollständig aufgeweiteten Vorformling wird bei noch immer wirksamem Druckgefälle die Auskleidung auch noch an dem von der Leitung freigegebenen Bereich an die Wandung des Behälters angedrückt, so daß sich am Ende eine Auskleidung ergibt, die überall unmittelbar an der Behälterwandung anliegt und keine wesentlichen Vorsprünge oder Unebenheiten aufweist, die durch die Leitung verursacht sind. Dazu kann es zweckmäßig sein, der Leitung eine Querschnittsform zu geben, die das Anlegen des Bereiches der Innenauskleidung, der zunächst die Leitung abdeckte, an die Behälterwandung nach Entfernen der Leitung erleichtert und begünstigt. Das zum Anlegen dieses Bereiches erforderliche Druckgefälle kann dadurch erzielt werden, daß die dann als Saugleitung wirksame Leitung während des Herausziehens an einer Unterdruckquelle angeschlossen ist bzw. bleibt. Es ist aber auch möglich, dazu den innerhalb des Vorformlings bzw. der daraus hergestellten Auskleidung herrschenden Überdruck zu verwenden, wobei natürlich sichergestellt sein muß, daß die Öffnung des Behälters in einer Weise verschlossen ist, die ein Herausziehen der Leitung ermöglicht. Es ist auch hierbei eine Kombination beider Maßnahmen anwendbar.

Im allgemeinen wird es zweckmäßig sein, die wenigstens eine Leitung zu einem Zeitpunkt zu entfernen, zu welchem das die Innenauskleidung bildende Material noch nicht vollständig abgekühlt ist, andererseits jedoch bereits so weit verfestigt ist, daß es durch das Herausziehen der Leitung keine unerwünschten Beanspruchungen erfährt, die zu einer Beschädigung oder sonstigen Funktionsbeeinträchtigung führen.

Es ist aber auch möglich, so zu verfahren, daß die wenigstens eine Leitung nach dem Anbringen der Innenauskleidung im Behälter in der Position zwischen dessen Wandung und der Auskleidung verbleibt. Der durch die Leitung in Anspruch genommene Querschnitt ist so klein, daß die dadurch verursachte Volumenverringerung des für das Füllgut verfügbaren Innenraumes des Behälters nicht ins Gewicht fällt. Außerdem könnte die Leitung so ausgebildet, insbesondere mit einem solchen Querschnitt versehen sein, daß bei völlig zur Auskleidung aufgeweitetem Vorformling ein Formschluß zwischen Auskleidung und Leitung entsteht, der dazu beiträgt, die Auskleidung gegenüber der Innenwandung des Behälters zu fixieren, so daß bei Rollbewegungen, die der z. B. als Faß ausgebildete Behälter insbesondere bei horizontalem Verlauf seiner Längsachse, ausführen kann, Relativbewegungen zwischen Behälter und Auskleidung vermieden oder doch zumindest stark verringert werden. Dies gilt insbesondere dann, wenn die Leitung beispielsweise durch Schweißen oder Kleben an der Innenfläche der Behälterwandung angeheftet ist.

Beim Anbringen der Innenauskleidung an dem Behälter kann so vorgegangen werden, daß zunächst in den Behälter durch dessen Öffnung die wenigstens eine Leitung in diesen so eingebracht wird, daß sie innerhalb des Behälters entsprechend der Kontur von dessen innerer Mantelfläche an oder nahe derselben bis vorzugsweise nahe dem Boden des Behälters sich erstreckt. Zweckmäßig ist die Leitung so ausgebildet, daß sie einerseits eine ausreichende Formstabilität aufweist, um sie bezüglich ihres Längsverlaufes an die Innenkontur des Behälters anpassen zu können. Falls die Leitung nach Fertigstellung der Innenauskleidung entfernt werden soll, muß sie andererseits aber auch eine gewisse, ggf. elastische, Verformbarkeit aufweisen, damit sie beim Herausziehen der Innenkontur des Behälters folgen kann.

Nach dem Einbringen der wenigstens einen Leitung wird der Vorformling in den Grundbehälter hinein extrudiert, wobei im allgemeinen durch eine entsprechende Zuführung im Extrusionskopf ein Gas, vorzugsweise Luft, unter einem geringen Druck in den entstehenden Vorformling eingeführt wird. Dies kann deshalb notwendig sein, weil der Vorformling normalerweise sehr dünnwanding ist. Sobald das untere Ende des Vorformlings seine für den Blasvorgang erforderliche Lage und damit der Vorformling seine erforderliche Länge erreicht hat, erfolgt die eigentliche Aufweitung des Vorformlings, die im allgemeinen zunächst dazu führt, daß Bereiche des Vorformlings in einem Abstand vom Boden des Behälters an dessen innerer Mantelfläche zur Anlage kommen und der an den Behälterboden anschließende Raum zwischen Wandung des Behälters und teilweise aufgeweitetem Vorformling gegenüber der Öffnung des Behälters mehr oder weniger abgeschlossen wird. Spätestens nach Erreichen dieses Zustandes wird das Druckgefälle wirksam, durch welches die in diesem Raum eingeschlossene Luft durch die Leitung(en) abgeführt wird. Dieses Druckgefälle kann dadurch bewirkt werden, daß Unterdruck an die Leitung(en) angelegt wird. Normalerweise wird aber auch unter der Einwirkung des sich ausdehnenden Vorformlings Überdruck in diesem Raum verursacht, der die darin befindliche Luft durch die Leitung(en) verdrängt, bis der Vorformling zur Anlage an der Wandung des Behälters gelangt.

In dem übrigen Teil des Behälters wird im allgemeinen ebenfalls eine vollständige Anlage des Vorformlings an der Wandung des Behälters jedenfalls in dem Abschnitt erfolgt sein, in welchem der Behälter regelmäßig, also beispielsweise zylindrisch oder jedenfalls ohne große Änderungen der Querschnittsfläche ausgebildet ist. Dies wird normalerweise ohne weitere Maßnahmen dadurch bewirkt, daß in diesem Abschnitt die zwischen Innenwandung des Behälters und Vorformling befindliche Luft im Zuge der Aufweitung des Vorformlings nach oben in Richtung auf die Öffnung des Behälters verdrängt werden kann. Soweit in dem der Öffnung des Behälters zugekehrten Endbereich des letzteren aufgrund der Form desselben Luft nicht durch die Austrittsöffnung entweichen kann, wird diese ebenfalls durch die wenigstens eine Leitung abgeführt, deren Wandung über ihre Länge innerhalb des Behälters mit Löchern versehen sein kann.

Um die Innenauskleidung nach Entleeren des Behälters ohne große Schwierigkeiten aus dem Behälter entfernen zu können, kann es zweckmäßig sein, besondere Maßnahmen zu treffen, die das Herausziehen der Innenauskleidung aus dem Behälter erleichtern. Dies wird insbesondere dann von Bedeutung sein, wenn die Innenauskleidung eine so geringe mechanische Festigkeit aufweist, daß sie nicht einfach am oberen Ende erfaßt und in einem Stück aus dem Behälter herausgezogen werden kann. Dabei kann auch die Tatsache eine Rolle spielen, daß die Haftung der Innenauskleidung an der inneren Begrenzung des Behälters so groß ist, daß dadurch ein Herausziehen der Innenauskleidung erschwert wird. Wenn der wenigstens eine Schlauchabschnitt, durch den die zwischen aufzuweitendem Vorformling und Wandung des Behälters befindliche Luft abgeführt wird, nach Herstellung der Innenauskleidung im Behälter verbleibt, besteht die Möglichkeit, nach Entleeren des Behälters zum Zwecke der Entfernung der Innenauskleidung Druckluft in den bzw. die Schlauchabschnitt(e) zu geben, um so durch den sich bildenden überdruck die Innenauskleidung von der Wandung des Behälters zu lösen. Eine weitere Möglichkeit besteht darin, vor dem endgültigen Aufweiten des Vorformlings zur Innenauskleidung in den Behälter wenigstens eine im wesentlichen U-förmige Schlaufe mit kleiner Querschnittsfläche aus flexiblem Material einzulegen, deren Länge so bemessen ist, daß nach dem Aufweiten des Vorformlings die Schlaufe entlang der Kontur des Behälters zwischen dessen Wandung und der Innenauskleidung verläuft und somit die Innenauskleidung umgreift und unterfaßt. Die beiden Enden der Schlaufe enden im Bereich der Öffnung des Behälters derart, daß sie wenigstens bei entleertem Behälter in eine Position gebracht werden können, in welcher sie von Hand oder maschinell erfaßt werden können. Es reicht dann aus, an der Schlaufe zu ziehen, um so mit der Schlaufe die Innenauskleidung vom Behälter zu lösen und aus diesem herauszuziehen. Dazu ist es lediglich erforderlich, die wenigstens eine Schlaufe so auszubilden, daß sie die dazu notwendigen Zugkräfte übertragen kann. Es kann zweckmäßig sein, zwei - ggf. auch mehr - Schlaufen vorzusehen, die in gleichen Winkelabständen über den Umfang verteilt angeordnet sein können. Es ist möglich, den Schlauchabschnitt, durch den die Luft aus dem Bereich zwischen Behälter und aufzuweitendem Vorformling abgeführt ist, als Schlaufe auszubilden. Dies setzt natürlich voraus, daß in diesem Fall der Schlauchabschnitt nach dem Aufweiten der Innenauskleidung im Behälter verbleibt. Es ist aber auch möglich, andere Mittel vorzusehen, beispielsweise für die Schlaufe(n) Abschnitte eines Klebebandes vorzusehen, welches dann gleichzeitig auch dazu dienen kann, die Innenauskleidung mit dem Behälter zu verbinden. Es ist ohne weiteres möglich, ein derartiges Klebeband einerseits sehr dünn, aber andererseits mit einer Festigkeit auszuführen, die das Aufbringen großer Zugkräfte erlaubt.

Es ist auch möglich, kürzere beidseitig klebende Klebeband-Abschnitte, die etwa bis zum Boden des Behälters reichen, in diesem über dessen Umfang verteilt anzuordnen, so daß nach dem Aufweiten des Vorformlings zur Innenauskleidung eine lösbare Klebverbindung zwischen der Behälterwandung und der Innenauskleidung entsteht. Auch hier gilt, daß die Klebebänder kräftig genug sein müssen, um Zugkräfte aufzunehmen, die ein Lösen der Klebeverbindung von der Behälterwandung ermöglichen und es erlauben, die an den Klebeband-Abschnitten haftende Innenauskleidung aus dem Behälter herauszuziehen.

Eine andere Maßnahme, die das Herausziehen der Innenauskleidung aus dem Behälter erleichtert, kann darin bestehen, den Vorformling und/oder die daraus hergestellte Innenauskleidung mit einem Vorsprung zu versehen, an welchem ein Werkzeug angreifen kann, welches zum Herausziehen der Innenauskleidung dient. Da im allgemeinen die Innenauskleidung wenigstens an Teilbereichen der Wandung des Behälters direkt durch geeignete Klebemittel angeheftet wird, stellt normalerweise das Herausziehen der Innenauskleidung aus dem Behälter gleichzeitig ein Ablösen von der Behälterwandung dar.

In der Zeichnung sind Ausführungsbeispiele der Erfindung im Schema dargestellt. Es zeigen:
- Fig. 1: einen Längsschnitt durch einen Behälter mit darin eingeführtem Vorformling,
- Fig. 2: einen Schnitt nach der Linie II-II der Fig. 1,
- Fig. 3: eine der Fig. 1 entsprechende Darstellung, jedoch mit dem Vorformling in teilweise aufgeweitetem Zustand,
- Fig. 4: einen Schnitt nach der Linie IV-IV der Fig. 3,
- Fig. 5: einen Ausschnitt aus Fig. 4 in wesentlich größerem Maßstab,
- Fig. 6: eine der Fig. 5 entsprechende Darstellung einer weiteren Ausführungsform,
- Fig. 7: eine der Fig. 6 entsprechende Darstellung, jedoch in einem späteren Verfahrensstadium,
- Fig. 8: im Ausschnitt einen Längsschnitt durch einen Behälter in einem Vorbereitungsstadium vor Einführen des Vorformlings,
- Fig. 9: eine der Fig. 8 entsprechende Darstellung, jedoch mit der fertigen Innenauskleidung.
- Fig. 10: die perspektivische Ansicht eines Behälters, der in besonderer Weise für das Entfernen der Innenauskleidung nach Benutzung vorbereitet ist,
- Fig. 11: die perspektivische Ansicht einer weiteren Ausführungsform eines so vorbereiteten Behälters,
- Fig. 12: eine weitere Ausführungsform eines für das Entfernen der Innenauskleidung vorbereiteten Behälters in einer Darstellung analog jener gemäß Fig. 1,
- Fig. 13: einen Ausschnitt aus Fig. 12 in größerem Maßstab,
- Fig. 14: eine der Fig. 13 entsprechende Darstellung, die ein Stadium beim Entfernen der Innenauskleidung zeigt,
- Fig. 15: eine weitere Ausführungsform eines für das spätere Entfernen der Innenauskleidung vorbereiteten Behälters in einer Darstellung analog jener gemäß Fig. 1,
- Fig. 16: die dazugehörige Seitenansicht, teilweise im Schnitt, des mit der Auskleidung versehenen Behälters,
- Fig. 17: eine der Fig. 16 entsprechende Darstellung, die ein Stadium beim Entfernen des Innenbehälters zeigt,
- Fig. 18: eine der Fig. 10 entsprechende Darstellung einer weiteren Ausführungsform.

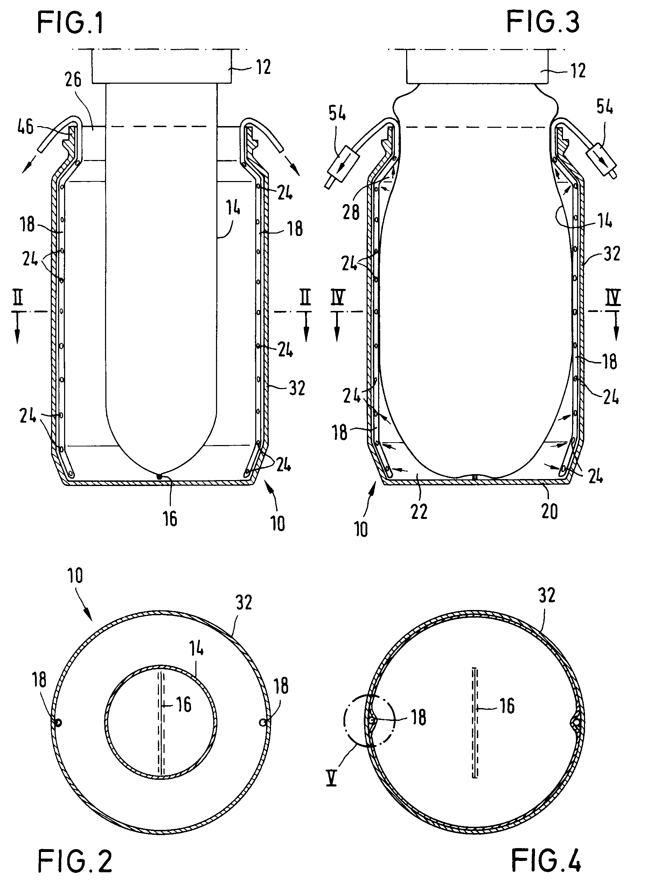

Beim Ausführungsbeispiel gemäß den Fig. 1 - 5 wird der mit einer Innenauskleidung zu versehene, nach Art eines Weithalsfasses ausgebildete Behälter 10 unter dem Extrusionskopf 12 einer Extrusionseinrichtung angeordnet, der unterseitig mit einer ringförmigen Austrittsöffnung zum Extrudieren von etwa schlauchförmigen Vorformlingen 14 aus thermoplastischem Material, beispielsweise einem Polyolefin, versehen ist. Der Vorformling 14 ist an seinem unteren Ende verschlossen. Dies kann, ausgehend von einem zunächst an seinem freien Ende offenen Schlauchabschnitt, in bekannter Weise dadurch geschehen, daß das freie Schlauchende unter Bildung einer Schweißnaht 16 zusammengedrückt wird. In Fig. 1 der Zeichnung weist der Vorformling 14 bereits die zum Herstellen der Innenauskleidung erforderliche Länge auf. Das Verschließen am unteren Ende kann beispielsweise bereits geschehen, wenn der Vorformling erst ein kurzes Stück aus dem Spritzkopf 12 ausgetreten ist und der auszukleidende Behälter 10 sich noch nicht unter dem Spritzkopf 12 befindet. Bei der Bildung der Schweißnaht 16 kann auch Überschußmaterial abgetrennt worden sein. Dies sind dem Fachmann bekannte Vorgänge, die keiner besonderen Erläuterung bedürfen.

Innerhalb des Behälters 10 sind zwei Leitungen 18 angeordnet, deren jeweiliges eines offenes Ende in der Nähe des Bodens des Behälters positioniert ist und deren jeweils anderes Ende sich außerhalb des Behälters 10 befindet. Jede der beiden Leitungen 18 ist bezüglich ihres Längsverlaufs an die Kontur der Behälterwandung 10 angepaßt, so daß sie jedenfalls unter der Einwirkung etwa radial nach außen verlaufender Kräfte, wie sie von dem expandierenden Vorformling aufgebracht werden, gegen die innere Begrenzungsfläche der Behälterwandung 32 gedrückt wird. Die beiden Leitungen 18 sind um 180° in Umfangsrichtung des Behälters 10 gegeneinander versetzt ungefähr in einer im wesentlichen vertikalen Ebene angeordnet, die sich senkrecht zu der Ebene erstreckt, in welcher die den Vorformling 14 verschließende Schweißnaht 16 verläuft.

Der Vorformling 14, aus dem die innere Auskleidung für den Behälter 10 hergestellt werden soll, ist verhältnismäßig dünnwandig ausgebildet, so daß durch den Extrusionskopf 12, der mit einer in der Zeichnung nicht dargestellten Bohrung für den Durchgang von Druckluft versehen ist, im allgemeinen Luft in den Vorformling eingeführt wird, um dessen Wandung zu stützen.

Sobald die Teile die in Fig. 1 der Zeichnung dargestellte Lage einnehmen, wird der Vorformling 14 durch Einführen zusätzlicher Luft aufgeweitet, wie dies beim Extrusions-Blasverfahren üblich ist. Dabei hat der Behälter 10 die Funktion einer üblichen Blasform zum Herstellen von Hohlkörpern aus thermoplastischem Kunststoff.

Normalerweise wird das Aufweiten des Vorformlings 14 in der Weise erfolgen, daß der mittlere Bereich des Vorformlings 14 sich an dem ihm gegenüberliegenden Bereich der Innenfläche der Wandung des Behälters 10 anlegt und dabei in diesem Bereich auch die beiden Leitungen 18 umschließt, wie dies Fig. 3 und 4 erkennen lassen. Dabei ist es im allgemeinen unvermeidlich, daß in dem dem Boden 20 zugekehrten Bereich 22 des Behältes 10 Luft eingeschlossen wird, die es verhindern würde, daß der Vorformling 14 in diesem Bereich 22 zur vollständigen Anlage am Boden 20 und an der Wandung 32 des Behälters 10 gelangt. Es stellt sich etwa der in Fig. 3 der Zeichnung dargestellte Zustand ein, wobei, wenn keine zusätzlichen Maßnahmen getroffen werden, die Aufweitung im Bereich 22 soweit erfolgt, bis ein Gleichgewicht zwischen dem Druck im Inneren des Vorformlings 14 und dem Druck im Bereich 22 eintritt.

Spätestens zu dem Zeitpunkt, zu welchem der Vorformling 14 im Verlauf seiner Aufweitung die in Fig. 3 der Zeichnung dargestellte Gestalt annimmt, in welcher er in seinem mittleren Bereich an der Behälterwandung anliegt, entsteht normalerweise unter der Einwirkung des sich weiter ausdehnenden Vorformlings im Bereich 22 ein gewisser Überdruck, der zur Folge hat, daß die im Bereich 22 befindliche Luft durch die beiden Leitungen 18 nach außen verdrängt wird. Alternativ oder zusätzlich können die beiden Leitungen 18 an eine Unterdruckquelle angeschlossen sein, so daß die im Bereich 22 befindliche Luft durch die beiden Leitungen 18 abgesaugt wird und aufgrund der Evakuierung im Bereich 22 der Vorformling 14 sich auch in diesen Bereich hinein ausdehnen kann, bis er satt an der Wandung 32 und dem Boden 20 des Behälters 10 anliegt. Dabei spielt es keine Rolle, welche Kontur die Wandung 32 im Bereich 22 aufweist, da aufgrund der Evakuierung dieses Bereiches über die Leitungen 18 und des zumindest dadurch bewirkten Überdrucks im Vorformling letzterer sich dort jedem Verlauf der Wandung und/oder des Bodens anpaßt. Dies gilt auch für den Übergang zwischen Boden 20 und Wandung 32. Es muß lediglich sichergestellt sein, daß das Evakuieren des Bereiches 22 so schnell erfolgt, daß der Vorformling 14 jedenfalls in diesem Bereich noch eine Temperatur aufweist, die die plastische Verformung des ihn bildenden Kunststoffes erlaubt. Um eine möglichst schnelle Evakuierung auch aus Gründen der Produktivität zu ermöglichen, sind beide Leitungen 18 über ihre Längserstreckung mit in Abständen voneinander angeordneten Durchbrechungen 24 versehen, so daß das Abführen der Luft aus dem Bereich 22 nicht nur durch die Öffnung am Ende der jeweiligen Leitung 18 erfolgt.

Bei dem in der Zeichnung dargestellten Ausführungsbeispiel erstrecken sich beide Leitungen 18 bis zum Boden 20 des Behälters 10. Ob dies erforderlich ist, hängt auch von der Kontur des Behälters 10 und dessen Durchmesser in dem dem Boden 20 benachbarten Bereich ab. In jedem Fall muß aber sichergestellt sein, daß keine störenden Lufteinschlüsse zwischen Vorformling 14 und Behälterwandung 32 verbleiben, sondern daß der im Bereich 22 expandierende Vorformling 14 die Luft in Richtung auf zumindest eine der beiden Leitungen 18 verdrängt. Dies wird durch die bereits beschriebene Anordnung der beiden Leitungen in einer vertikalen Ebene, die quer zur Schweißnaht 16 verläuft, begünstigt. Dabei ist es nicht unbedingt erforderlich, zwei Leitungen vorzusehen. In vielen Fällen wird vielmehr eine Leitung ausreichen, die allerdings dann in gleicher Weise relativ zur Schweißnaht 16 angeordnet sein sollte. Ob mehr als eine oder mehr als zwei Leitung(en) erforderlich ist bzw. sind, wird im wesentlichen von der Größe und/oder der Kontur des Behälters 10 abhängen, aber ggf. auch davon, ob die in dem zu evakuierenden Bereich befindliche Luft lediglich durch den sich aufweitenden Vorformling verdrängt oder ob, ggf. zusätzlich, auch Unterdruck zur Einwirkung gebracht wird.

Fig. 3 läßt erkennen, daß auch im oberen Abschnitt des Behälters 10 aufgrund der Abnahme seines Durchmessers in Richtung auf die Öffnung 26 ein normalerweise umlaufender Bereich 28 entsteht, in welchem durch den im Halsabschnitt 46 vollständig aufgeweiteten Vorformling 14 Luft eingeschlossen wird. Auch diese Luft wird über die Leitung(en) 18 abgeführt, ggf. abgesaugt, so daß auch hier eine satte Anlage des Vorformlings 14 an der Wandung 32 des Behälters 10 zur Bildung einer Innenauskleidung desselben erfolgt.

Die Bildung eines an den Boden 20 anschließenden Bereiches, der im Zuge des Aufweitens des Vorformlings gegenüber der Öffnung des Behälters abgeschlossen wird, wird bei den meisten Behältern eintreten, es sei denn, daß letztere gerade in diesem Bereich eine Gestalt aufweisen, die ein vollständiges Verdrängen der Luft ausschließlich durch den sich aufweitenden Vorformling ermöglicht. Dies wird jedoch nur sehr selten der Fall sein, da der Vorformling aufgrund seiner Länge immer dazu tendieren wird, im mittleren Bereich unter der Einwirkung des inneren Überdrucks zuerst zu expandieren, wobei es dann zwangsläufig zu einem Lufteinschluß in der Nähe des Bodens, also im Bereich 22 des Ausführungsbeispiels gemäß den Fig. 1 - 4 kommt. Inwieweit in anderen Bereichen des Behälters ebenfalls Luft abgeführt, ggf. abgesaugt werden muß, um Einschlüsse zu vermeiden, hängt ebenfalls im wesentlichen von der Gestalt des Behälters ab. Der Bereich 28 des Ausführungsbeispiels gemäß den Fig. 1 - 4 wird für viele Anwendungsfälle typisch sein, bei denen der die Öffnung des Behälters enthaltende Bereich eine gegenüber dem übrigen Behälter merkliche Durchmesserverringerung aufweist. Ein wesentlicher Vorteil der Erfindung besteht darin, daß aufgrund der über die Länge der jeweiligen Leitung verteilten Durchbrechungen 24 praktisch überall, wo Einschlüsse entstehen könnten, die Luft abgeführt, ggf. abgesaugt wird, ohne daß dazu besondere Maßnahmen erforderlich wären.

Andererseits besteht ohne weiteres die Möglichkeit, für das Abführen der Luft zwischen Behälterwandung und aufzuweitendem Vorformling andere und/oder zusätzliche Mittel einzusetzen. Dies kann insbesondere dann zweckmäßig sein, wenn der mit der Innenauskleidung zu versehende Behälter eine kompliziertere Form aufweist als die in den Zeichnungen dargestellten Ausführungsbeispiele. So besteht die Möglichkeit, für jeden der zwischen Behälterwandung und sich ausdehnendem Vorformling entstehenden Räume, die durch den sich ausdehnenden Vorformling abgeschlossen werden, eigenständige Leitungen zum Abführen der zu entfernenden Luft vorzusehen. Diese können ebenfalls an eine Unterdruckquelle angeschlossen werden, wobei ohne weiteres durch entsprechende Steuerung der Unterdruckquelle bzw. der Verbindung zwischen dieser und der jeweiligen Saugleitung so vorgegangen werden kann, daß eine Absaugung erst in dem Augenblick erfolgt, in dem der jeweilige Raum effektiv gegenüber der Außenatmosphäre abgeschlossen ist. Auf diese Weise wird vermieden, daß während des Absaugens noch unkontrolliert Luft von außen in den zu evakuierenden Bereich eintritt.

Es ist aber auch möglich, nur wenige, ggf. nur eine Saugleitung zu verwenden, wobei ein Ventilsystem vorgesehen ist, welches in Abhängigkeit von den jeweiligen Gegebenheiten bestimmte an der Saugleitung befindliche Öffnungen freigibt, um entsprechende Bereiche zwischen Behälterwandung und sich ausdehendem Vorformling zu entlüften. So können z. B. jene Bereiche, die in der zeitlichen Reihenfolge später zu evakuieren sind, durch geeignete Ventile gegenüber der Saugleitung solange abgeschlossen bleiben, bis die zuerst zu evakuierenden Bereiche soweit entleert sind, daß ein bestimmter Unterdruck erreicht ist, der zum Öffnen der Ventile für die später zu evakuierenden Bereiche ausreicht. Solche ventilartigen Öffnungen in der Saugleitung können durch Schnitte in der aus elastischem Material bestehenden Wandung der Schlauchleitung gebildet werden, die dazu führen, daß sich bei größerer Druckdifferenz Öffnungen in der Schlauchwandung bilden, durch die Luft hindurchströmen kann. Diese Schnitte können linear verlaufen, aber auch kreuz- bzw. sternförmig angeordnet sein, wobei, solange der Unterdruck nicht ausreicht, die die Schnitte begrenzenden Wandteile des Schlauches zu verformen, keine oder nur vernachlässigbare Luftmengen durch die Schnitte hindurchtreten können. Durch Länge und Anordnung der Schnitte kann auch eine Einstellung bezüglich des jeweiligen Druckes erreicht werden, bei welchem eine den Durchgang für die Luft freigebende Öffnung entsteht.

Ferner ist es möglich, eine Saugleitungseinrichtung zu verwenden, die aus einem verhältnismäßig dünnen, äußeren Folienschlauch mit einer Vielzahl von Durchbrechungen und einem innerhalb dieses Folienschlauches passend angeordneten, steiferen Schlauches mit einer kleineren Anzahl von Öffnungen in der Schlauchwandung besteht. Durch Längsverschieben des inneren, steiferen, jedoch verformbaren Schlauches gegenüber dem äußeren Folienschlauch können Öffnungen für den Luftdurchtritt wirksam oder unwirksam gestellt werden. Im allgemeinen wird es zweckmäßig sein, im Verlaufe des Entlüftungsvorganges den inneren, steiferen Schlauch, der elastisch verformbar sein sollte, aus dem äußeren Folienschlauch herauszuziehen, wobei dann der äußere Folienschlauch im Behälter zwischen dessen Wandung und der Innenauskleidung verbleibt, so daß er zu einem späteren Zeitpunkt andere Funktionen, die mit dem Lösen und Entfernen der Innenauskleidung zusammenhängen, übernehmen kann. Der Folienschlauch kann so flexibel und verformbar sein, daß er beispielsweise bei völlig aufgeweiteter Innenauskleidung flach gedrückt ist und eine streifenförmige Gestalt annimmt, nachdem der innere, steifere, den Folienschlauch stützende Schlauch herausgezogen worden ist. Es ist natürlichh auch möglich, die aus den beiden Schläuchen bestehende Kombination insgesamt aus dem Behälter herauszuziehen. Hierbei kann jedoch ebenfalls durch relative Verschiebung oder Verdrehung beider Schläuche gegeneinander die Freigabe bestimmter Öffnungen für den Durchgang von Luft zu einem bestimmten Zeitpunkt bewirkt werden.

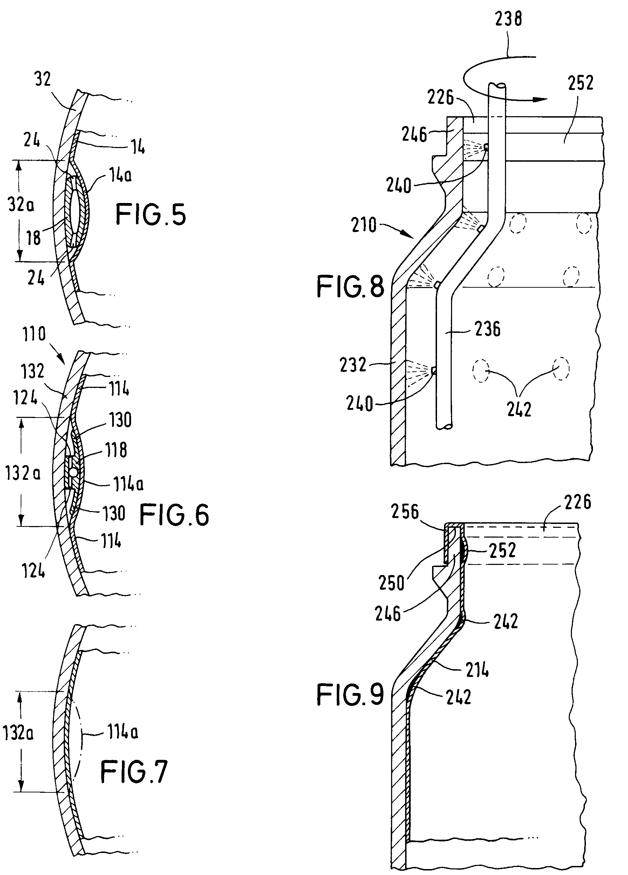

Fig. 5 läßt erkennen, daß die Leitungen 18 einen etwa elliptischen Querschnitt aufweisen, wobei die Durchbrechungen 24 auf dem Umfang des Querschnittes der Saugleitung 18 so angeordnet sind, daß sie vom aufgeweiteten Vorformling 14 nicht abgedeckt und somit nicht verschlossen werden. Allerdings können auch normale, d. h. im Querschnitt im wesentlichen kreisförmige Schläuche, aber auch Schläuche mit anderen Querschnitten verwendet werden.

Dies gilt auch für die Ausführungsform gemäß Fig. 6, bei welcher Teile, die mit denen des Ausführungsbeispiels gemäß den Fig. 1 - 5 übereinstimmen, mit gleichen, jedoch um 100 höheren Bezugszeichen versehen sind. Die Leitung 118 ist an ihrer der Innenauskleidung bzw. dem Vorformling 114 zugekehrten Seite mit seitlichen längsverlaufenden Stegen 130 versehen, deren Krümmung im Querschnitt der Leitung 118 spiegelbildlich zu der der Wandung des Behälters 110 verläuft und ungefähr denselben Radius aufweist. Die Durchbrechungen 124 befinden sich jeweils zwischen einem der Stege und der Wandung 132 des Behälters 110, so daß sie gegenüber dem zur Innenauskleidung aufgeweiteten Vorformling 114 abgeschirmt sind und letzterer die Durchbrechungen 124 nicht verschließen kann.

Da bei beiden Ausführungsformen die dem Behälterinneren zugekehrte und mit dem aufgeweiteten Vorformling 14 bzw. 114 in Berührung kommende Begrenzungsfläche der Leitung 18 bzw. 118 im Querschnitt eine Krümmung aufweist, die etwa der Krümmung der inneren Begrenzungsfläche der Wandung 32 bzw. 132 des Behälters 10 bzw. 110 entspricht, ist die Breite des aufgrund des Vorhandenseins der Leitung 18 bzw. 118 nicht an dem Behälter 10 bzw. 110 anliegenden Abschnittes 14a bzw. 114a etwa gleich dem gegenüberliegenden Abschnitt 32a bzw. 132a der Wandung des Behälters 10 bzw. 110, wie dies insbesondere Fig. 7 erkennen läßt, so daß nach Herausziehen der Leitung 18 bzw. 118 nach dem Aufweiten des Vorformlings 14 bzw. 114a der jeweils von der Leitung abgestützte Querschnittsbereich 14a, 114a selbst dann unter der Einwirkung des inneren Überdruckes gegen den gegenüberliegenden Wandbereich 32a bzw. 132a bis zur Anlage an demselben gedrückt wird, wenn die Auskleidung 14, 114 bereits soweit abgekühlt ist, daß sie ihre plastische Verformbarkeit verloren hat. Im übrigen kann die vorbeschriebene Verformung des Bereiches 14a bzw. 114a noch dadurch unterstützt werden, daß während des Herausziehens der jeweiligen Leitung die Absaugung wirksam bleibt, so daß gegenüber dem Raum, der der Aufnahme der jeweiligen Leitung 18 bzw. 118 diente, ein Überdruck selbst dann vorhanden ist, wenn der vom Vorformling bzw. von der daraus gebildeten Innenauskleidung umschlossene Raum nicht mehr unter einem Druck steht, der oberhalb des Atmosphärendruckes liegt.

Es ist auch möglich, die Leitung(en) im Behälter zu belassen. Dazu wäre es lediglich erforderlich, im Bereich der Öffnung 26 die Leitung(en) so abzutrennen, daß der der Öffnung zugeordnete Bereich der Innenauskleidung in der in Fig. 9 dargestellten Weise um den die Öffnung des Behälters begrenzenden Rand umgeschlagen und mit diesem in geeigneter Weise verbunden werden kann. Dabei ist es ohne weiteres möglich, auch die äußere Mantelfläche des die Öffnung 226 begrenzenden Halsbereiches 246 des Behälters 210 mit einem Klebstoffauftrag zu versehen, der dazu führt, daß der außerhalb des Behälters befindliche, umgefaltete Abschnitt 256 der Auskleidung an der äußeren Mantelfläche oder Teilbereichen derselben des Halsabschnittes 246 anhaftet. Darüber hinaus kann jener Abschnitt der Auskleidung, der sich außen und/oder innen im Bereich des Halsabschnittes 246 befindet, auch im Zusammenwirken mit einem Deckel oder einem ähnlichen Teil, welches den Behälter 210 verschließt, die Funktion einer Dichtung übernehmen, da das die Innenauskleidung bildende Material normalerweise leichter verformbar sein wird als die Wandung des Behälters 210.

Um zu verhindern, daß während des Gebrauchs des mit der Innenauskleidung versehenen Behälters in gefülltem oder ungefülltem Zustand sich die Innenauskleidung gegenüber dem eigentlichen Behälter 10 verschiebt, ist es zweckmäßig, eine Verbindung zwischen Behälter und Innenauskleidung vorzusehen. Diese Verbindung sollte einerseits ausreichend fest sein, um, auch bei gefülltem Behälter, insbesondere dann, wenn dieser Rollbewegungen ausführt, ein Ablösen der Innenauskleidung von der Wandung des Behälters zu verhindern. Andererseits sollte die Verbindung jedoch ein Entfernen der Innenauskleidung beispielsweise durch manuelles oder maschinelles Herausziehen aus dem Behälter nicht wesentlich behindern. Dazu kann die Innenauskleidung unter Verwendung eines geeigneten Klebers an der Wandung des Behältes angeheftet werden.

Dies kann beispielsweise auf die in den Fig. 8 und 9 dargestellte Weise erreicht werden, in welchen Teile, die mit denen des Ausführungsbeispiels gemäß den Fig. 1 - 5 übereinstimmen, mit gleichen, jedoch um 200 höheren Bezugszeichen versehen sind. Zur Vorbereitung auf das Anbringen der Innenauskleidung wird in den Behälter 210 zunächst ein Rohr 236 eingeführt, welches an die Kontur der Behälterwandung angepaßt ist und, wie durch den Pfeil 238 angedeutet, etwa parallel zum Umfang des Behälters 210 innerhalb desselben eine Schwenkbewegung ausführt. Das Rohr 236 ist mit Düsen 240 versehen, die so angeordnet sind, daß eine aus ihnen austretende Kleberflüssigkeit gegen die innere Begrenzungsfläche der Wandung 232 des Behälters 210 gesprüht wird. Im konkreten Fall sind die Düsen so angeordnet, daß bei diskontinuierlicher Zuführung des zu versprühenden Klebers auf der inneren Begrenzungsfläche der Wandung 232 ein mehr oder weniger regelmäßiges Muster von Bereichen 242 entsteht, die mit einem Kleberauftrag versehen sind. Nach Aufbringen eines Auftrags in den Bereichen 242 wird der Behälter 210 in der im Zusammenhang mit den Fig. 1 - 5 beschriebenen Weise mit einer inneren Auskleidung versehen, die beim Aufweitvorgang eine haftende Verbindung mit den Kleberbereichen 242 eingeht und damit in ihrer Lage zum Behälter 210 gesichert ist. Die als Kleber verwendete Substanz wird dabei unter Berücksichtigung der Materialeigenschaften von Behälter 210 und Innenauskleidung 214 so gewählt, daß die Möglichkeit besteht, die Innenauskleidung später aus dem Behälter 210 herauszuziehen, ohne daß die Innenauskleidung reißt oder der Behälter 210 beschädigt wird. Der in den Bereichen 242 aufgebrachte Kleber kann so beschaffen sein, daß er für mehrere nacheinander aufgebrachte Innenauskleidungen verwendet werden kann, ohne jedesmal erneuert zu werden.

Eine andere Möglichkeit besteht darin, den Vorformling bereits beim Extrudieren außenseitig mit einer Schicht aus einem geeigneten Kleber zu versehen, der, wenn er beim Aufweiten in Kontakt mit der Wandung des Behälters kommt, an diesem anhaftet. Die Herstellung eines derartigen Vorformlings ist unter Anwendung des Koextrusionsverfahrens ohne Schwierigkeiten möglich.

Beim Ausführungsbeispiel gemäß den Figuren 8 und 9 ist die Wandung 232 des Behälters 210 innenseitig nahe der Öffnung 226 mit einer umlaufenden, streifenförmigen, kontinuierlichen Schicht 252 eines Klebers versehen. Der dieser Schicht 252 gegenüberliegende Bereich der inneren Auskleidung haftet an dieser Schicht 252 über den gesamten Umfang derselben, so daß eine umlaufende, ununterbrochene Dichtung entsteht, durch die der an diese Dichtung in Richtung auf den Boden des Behälters anschließende Bereich zwischen Behälterwandung 232 und innerer Auskleidung 214 gegenüber der Außenatmosphäre abgeschlossen ist und ein ggf. in diesem Bereich vorhandener geringer Unterdruck aufrecht erhalten bleibt.

In allen Fällen kann es zweckmäßig sein, einen durch Wärme aktivierbaren Kleber zu verwenden, der einerseits durch die am Ende des Aufweitvorganges noch warme Innenauskleidung aktiviert und andererseits zwecks Erleichtern des Entfernens der Innenauskleidung nach Gebrauch und Entleerung des Füllguts wieder erwärmt werden kann.

Abweichend von der im Zusammenhang mit den Fig. 1 - 4 beschriebenen Verfahrensweise ist es auch möglich, den Vorformling unabhängig von dem damit auszukleidenden Behälter zu extrudieren und - ggf. nach nochmaliger Erwärmung - beispielsweise mittels einer an sich bekannten Greifereinrichtung in den Behälter einzuführen. Dies könnte die Handhabung bei der Herstellung und beim Einführen des Vorformlings erleichtern, setzt allerdings die Verwendung einer besonderen Zuführung für die Druckluft voraus.

Die Wandung des Vorformlings 14 kann unabhängig von der bereits erwähnten Möglichkeit, sie zweischichtig auszubilden, wobei die äußere Schicht von einem Kleber gebildet wird, auch zur Erzielung eines anderen, ggf. zusätzlichen Effektes mehrschichtig ausgebildet sein derart, daß neben einer Schicht aus einem Material, welches die erforderliche mechanische Festigkeit der Innenauskleidung gewährleistet, noch eine Schicht aus einem anderen Material vorhanden ist, welche beispielsweise als sogenannte Barriereschicht dient, die für bestimmte Substanzen undurchlässig ist. Auf diese Weise ausgebildete und im Extrusions-Blasverfahren hergestellte Hohlkörper sind bekannt. Im vorliegenden Fall hätte eine derartige mehrschichtige Ausbildung der Wandung der Innenauskleidung möglicherweise den Vorteil, daß auch solche Kunststoffbehälter für Füllgüter, die das Vorhandensein einer undurchlässigen Barriereschicht erfordern, verwendet werden können, die selbst keine Barriereschicht aufweisen.

Die Anwendung der Erfindung ist nicht beschränkt auf Behälter, die eine so große Öffnung aufweisen wie die in der Zeichnung dargestellten Behälter. Die Öffnung braucht lediglich groß genug zu sein, um wenigstens ein Rohr zum Abführen von Luft und einen Vorformling in den Behälter einbringen zu können. Dabei ist es möglich, einen Vorformling mit relativ geringem Durchmesser zu verwenden, dessen Wandstärke entsprechend dem maximalen Innendurchmesser des auszukleidenden Behälters und Wandstärke der Auskleidung zu bemessen wäre. Normalerweise wird mit abnehmendem Querschnitt der Öffnung des Behälters, insbesondere in Relation zur Größe des Querschnittes des Behälterkörpers, sich die Notwendigkeit ergeben, von außen Unterdruck an die Leitungen 18, 118 anzulegen, um eine ausreichende Entfernung der Luft aus diesem Raum zu gewährleisten. Die ggf. erforderlichen Saugpumpen sind in Fig. 3 der Zeichnung bei 54 angedeutet.

Im allgemeinen wird es zweckmäßig sein, besondere Vorkehrungen zu treffen, die das Entfernen der Innenauskleidung nach dem Entleeren des Behälters erleichtern. Dies gilt vor allem auch bei Behältern mit kleineren Öffnungen, da bei diesen das Innere des jeweiligen Behälters und damit die Innenauskleidung schlechter zugänglich sind.

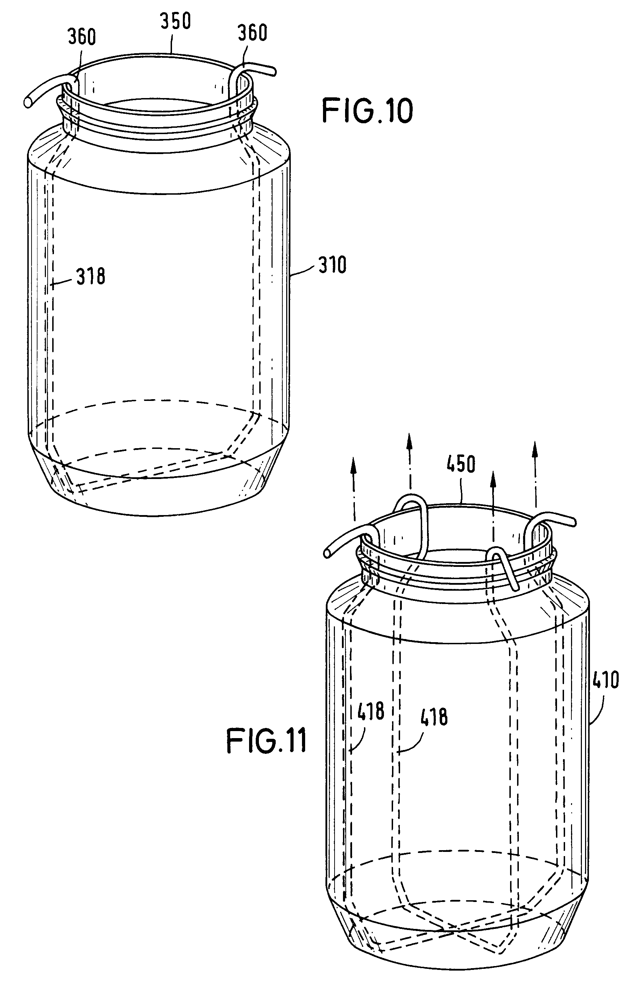

In Fig. 10 ist ein Ausführungsbeispiel dargestellt, bei welchem die beiden Saugleitungen 18 der Ausführungsform gemäß den Fig. 1 - 4 zu einer durchgehenden Saugleitung 318 verbunden sind, so daß eine im wesentlichen U-förmige Saugleitung entsteht, die nach Einbringen der Innenauskleidung diese unterseitig untergreift. Diese Saugleitung würde nach Herstellen der in Fig. 10 nicht dargestellten Innenauskleidung im Behälter 310 verbleiben, so daß später die Innenauskleidung in einfacher Weise dadurch entfernt werden kann, daß die beiden Endbereiche 360 Saugleitung erfaßt und aus dem Behälter 310 herausgezogen werden, wobei dann zwangsläufig auch die Innenauskleidung mit herausgezogen wird, und zwar auch dann, wenn letztere, wie bereits im Zusammenhang mit den vorstehend beschriebenen Ausführungsbeispielen erläutert, unter Verwendung eines Klebers an der inneren Oberfläche der Wandung des Behälters 310 lösbar angeklebt ist.

Beim Ausführungsbeispiel gemäß Fig. 11 sind zwei im allgemeinen U-förmige Saugleitungen 418 vorgesehen, von denen jede ungefähr in einer vertikalen Ebene angeordnet ist und beide Ebenen etwa senkrecht zueinander verlaufen. Hier gilt ebenfalls, daß durch Erfassen der Endbereiche der Saugleitungen 418 diese unter gleichzeitiger Mitnahme der Innenauskleidung aus dem Behälter herausgezogen werden können. Bei den Ausführungsformen gemäß den Fig. 10 und 11 sind sind die Saugleitungen 318 bzw. 418 so dargestellt, daß sie außerhalb des jeweiligen Behälters 310 bzw. 410 an eine Unterdruckquelle angeschlossen werden können. Nach Beendigung des Einbringens der Innenauskleidung können die Saugleitungen an ihrem oberen Ende so gekürzt werden, daß sie beispielsweise mit dem oberen Rand 350 bzw. 450 des jeweiligen Behälters abschließen, wobei es dann beispielsweise bei einer Ausgestaltung des oberen Endes der Innenauskleidung gemäß Fig. 9 lediglich notwendig wäre, den Abschnitt 256 vom jeweiligen Behälter zu lösen, um die oberen Enden der Saugleitungen 318 bzw. 418 erfassen zu können.

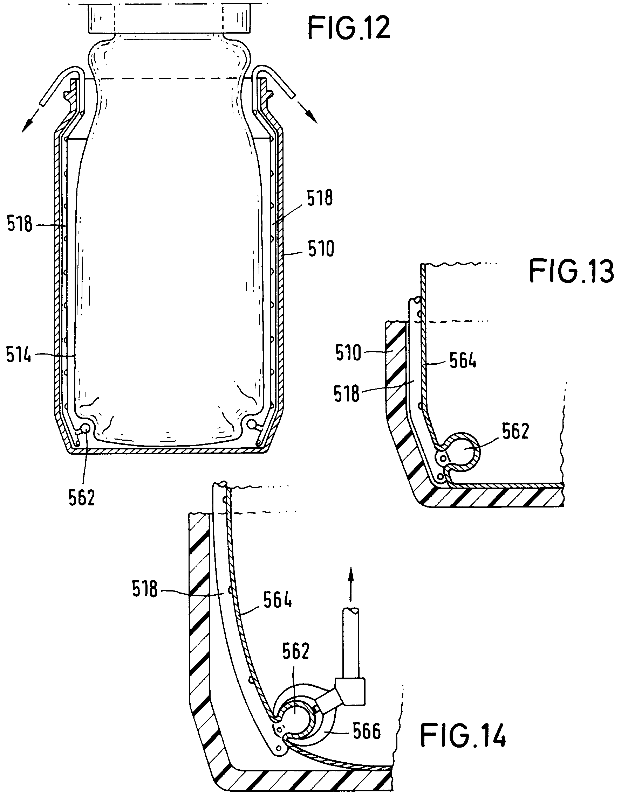

Bei der Ausführungsform gemäß den Fig. 12 - 14 sind analog der Ausführungsform gemäß den Fig. 1 - 4 zwei Saugleitungen 518 vorgesehen, die nicht miteinander verbunden sind. Jede Saugleitung 518 ist nahe ihrem unteren Ende mit einem knopfartigen Vorsprung 562 versehen, um den sich der Vorformling 514 im Zuge des Aufweitens herumlegt, so daß gemäß der Darstellung der Fig. 13 die aus dem Vorformling 514 gebildete Innenauskleidung 564 den knopfartigen Vorsprung 562 umfaßt, so daß bei entsprechender Form des Vorsprunges 562 eine formschlüssige Verbindung zwischen Vorsprung 562 und Innenauskleidung 564 entsteht. Es ist dann später, also nach Entleeren des Behälters 510, möglich, den Vorsprung 562 und den diesen umfassenden Bereich der Innenauskleidung 564 mit einem zangenartigen Werkzeug 566 zu ergreifen und Innenauskleidung sowie wenigstens die eine, über den Vorsprung 562 vom Werkzeug erfaßte Saugleitung 518 aus dem Werkzeug herauszuziehen. Selbstverständlich reichte es aus, nur eine der beiden Saugleitungen mit einem Vorsprung 562 zu versehen. Aus Gründen einer einfachen Herstellung und Lagerhaltung wird jedoch im allgemeinen so vorgegangen werden, daß alle Saugleitungen einen derartigen Vorsprung aufweisen. - Selbstverständlich ist es auch möglich, die Saugleitungen der Ausführungsbeispielen gemäß den Fig. 10 und 11 ebenfalls mit einem derartigen Vorsprung, der durch ein Werkzeug erfaßt werden kann, zu versehen.

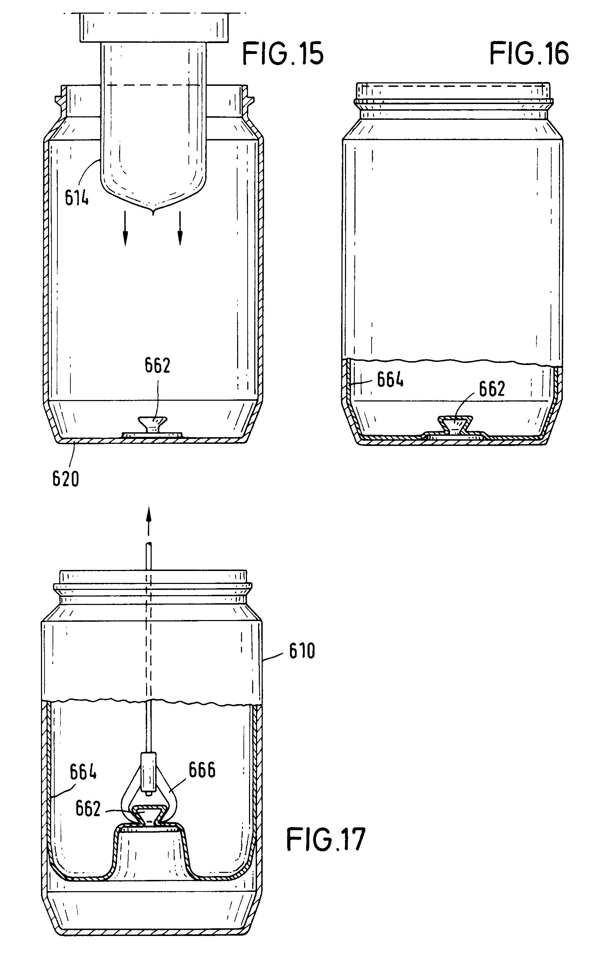

Beim Ausführungsbeispiel gemäß den Fig. 15 - 17 wird auf die innenseitige Begrenzungsfläche des Bodens 620 ein Formteil 662 aufgelegt, welches ggf. an seiner Unterseite mit einer Klebstoffbeschichtung versehen sein kann, um es leicht am Boden 620 zu fixieren, damit es beim späteren Aufweiten des Vorformlings 614 zur Innenauskleidung 664 seine Position beibehält. Die fertige Innenauskleidung umgreift das Formteil 662 derart, daß analog dem Ausführungsbeispiel gemäß den Fig. 12 - 14 eine formschlüssige Verbindung zwischen Formteil 662 und Innenauskleidung 664 entsteht. Fig. 17 zeigt, wie mittels eines Greifwerkzeuges 666, welches am Formteil 662 angreift, letzteres unter Mitnahme der Innenauskleidung 664 aus dem Behälter 610 entfernt wird.

Es ist selbstverständlich auch möglich, beim Ausführungsbeispiel gemäß Fig. 10 oder Fig. 11 an dem Bereich der Saugleitung 318 bzw. 418, die jeweils parallel zum Boden des Behälters verläuft, einen Vorsprung analog dem Formteil 562 anzubringen. Die jeweils zu treffende Wahl wird auch davon abhängen, ob die Saugleitung(en) beim Herausziehen der Innenauskleidung ebenfalls entfernt oder aber zwecks Verwendung bei der Herstellung der folgenden Innenauskleidung im Behälter verbleiben soll(en).

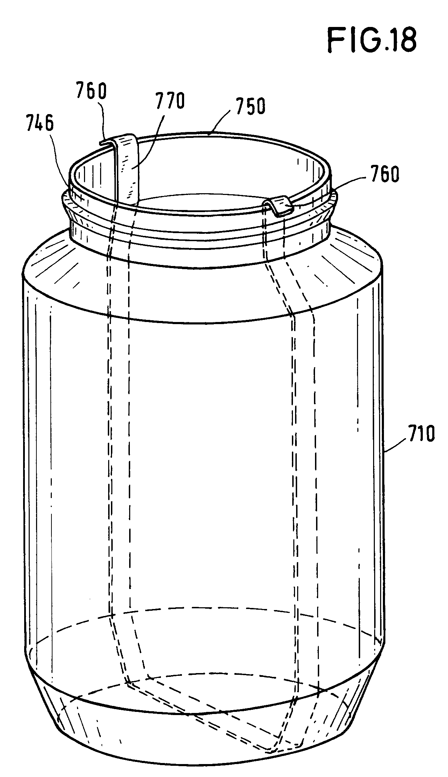

Beim Ausführungsbeispiel gemäß Fig. 18 wird der Behälter 710 vor dem Einbringen des in Fig. 18 nicht dargestellten Vorformlings innenseitig mit wenigstens einem Klebeband 770 versehen, welches in einer etwa vertikal verlaufenden Ebene entlang der inneren Oberfläche der Wandung und des Bodens des Behälters 710 an diesem lösbar angeklebt wird. Dieses etwa U-förmig verlaufende Klebeband kann dann wie die Leitungen 318 bzw. 418 der Ausführungsbeispiele gemäß den Fig. 10 oder 11 dazu verwendet werden, die nach Anbringung des Klebebandes 770 eingebrachte Innenauskleidung zu entfernen. Auch hier gilt, daß beispielsweise analog der Ausführungsform gemäß Fig. 11 mehrere Klebebänder, die in unterschiedlichen Ebenen verlaufen, vorgesehen sein können.

Die beiden den Rand 750 des Behälters 710 überragenden Endbereiche 760 des Klebebandes 770 können ohne weiteres nach außen umgelegt und an der äußeren Oberfläche des Halsabschnittes 746 des Behälters 710 angeklebt werden. Die Klebebänder sind so dünn, daß dies auch dann ohne weiteres möglich ist, wenn der Halsabschnitte 746 außenseitig mit einem Gewinde versehen ist. Überdies würden bei einer Ausgestaltung des oberen Endes der Innenauskleidung analog der Ausführungsform gemäß Fig. 9 die Endbereiche 760 der Klebebänder ohnehin von der Innenauskleidung bzw. deren äußerem Fortsatz, der über die stirnseitige Begrenzung des Halsabschnittes 764 bis zum angrenzenden äußeren Bereich desselben verläuftt, überdeckt werden. - Es kann vorteilhaft sein, auch die andere, Wandung und Boden des Behälters 710 abgekehrte Seite des Klebebandes 770 mit einer Klebstoffbeschichtung zu versehen, die eine haftende Verbindung zwischen Klebeband und Innenauskleidung bewirkt und so eine Relativbewegung zwischen Innenauskleidung und Behälter 710 bei Benutzung des letzteren verhindert. Auch dazu kann es ggf. erforderlich sein, mehr als ein Klebeband 770 innerhalb des Behälters 710 vorzusehen.

Darüber hinaus ist es auch möglich, die Saugleitungen gemäß den Ausführungsbeispielen der Fig. 10 - 14 mit einem Kleber zu versehen, um eine lösbare Klebverbindung zwischen Saugleitung sowie Behälter und/oder Innenauskleidung desselben herzustellen. Ein besonderer Vorteil der vorstehend im Zusammenhang mit den Fig. 10 - 18 beschriebenen Ausführungsform besteht darin, daß sie das Herausziehen auch solcher Innenauskleidungen ermöglichen, die sehr dünnwandig sind und damit bei Zugbeanspruchung leicht reißen.

Es wird beim Entfernen der Innenauskleidung aus dem Behälter im allgemeinen zweckmäßig sein, den dabei entstehenden Raum zwischen Behälter und Innenauskleidung jedenfalls dann zu belüften, wenn, wie beispielsweise im Falle des Ausführungsbeispiels gemäß den Fig. 15 - 17, die Innenauskleidung am Boden des Behälters beginnend aus diesem herausgezogen wird. Diese Belüftung kann durch im Behälter verbleibende Leitungen oder Teile derselben geschehen, die beim Aufweiten des Vorformlings zum Abführen der Luft dienten. Es ist aber auch möglich, die Innenauskleidung mit einer Öffnung zu versehen, durch die der beim Herausziehen der Innenauskleidung entstehende Raum zwischen Behälter und Innenauskleidung belüftet wird. Ein solches Loch kann z. B. durch das Werkzeug angebracht werden, mit welchem die Innenauskleidung aus dem Behälter entfernt wird.

Die Innenauskleidung braucht im allgemeinen nicht selbsttragend zu sein, wenngleich dies nicht ausgeschlossen sein soll.

Obwohl vorstehend die Erfindung anhand des Extrusions-Blasverfahrens erläutert wird, bei welchem der Vorformling für die Auskleidung durch Extrusion hergestellt wird, sind auch andere Verfahren und Möglichkeiten der Herstellung des Vorformlings geeignet und anwendbar. So kann der Vorformling z. B. aus vorgefertigten Folienabschnitten hergestellt werden, wobei dann ggf. ein zusätzlicher Arbeitsschritt erforderlich ist, bei dem der Vorformling auf eine für das Aufweiten geeignete Temperatur gebracht wird. Eine Aufweitung des Vorformlings sollte in jedem Fall durchgeführt werden, damit eine Anpassung der Kontur der aus dem Vorformling gebildeten Auskleidung an die Kontur des Behälters erfolgt.

## Patentansprüche

1. Verfahren zum Versehen eines Behälters (10) mit einer dünnwandigen Innenauskleidung, wobei in den Behälter durch dessen Öffnung (26) ein aufweitbarer warmplastischer Vorformling (14) aus thermoplastischem Material eingebracht und in dem Behälter (10) unter Anwendung inneren Überdrucks bis zur Anlage an der Innenfläche der luftdichten Wandung (32) des Behälters (10) aufgeweitet wird, dadurch gekennzeichnet, daß zumindest aus Teilbereichen (22, 28) des Raumes zwischen Behälterwandung (32) und Vorformling (14) durch wenigstens eine durch die Öffnung (26) des Behälters (10) in diesen eingeführte Leitung (18), die sich bis in wenigstens einen dieser Teilbereiche (22, 28) erstreckt, unter der Einwirkung eines Druckgefälles zwischen dem Raum zwischen Behälterwandung (32) und Vorformling (14) einerseits und dem außerhalb des Behälters (10) befindlichen Ende der Leitung (18) andererseits zumindest während des Aufweitens des Vorformlings (14) Luft nach außen abgeleitet wird.

2. Verfahren nach Anspruch 1, dadurch gekennzeichnet, daß das Druckgefälle aufgrund eines Überdrucks entsteht, der im Raum zwischen Behälterwandung (32) und Vorformling (14) durch das Aufweiten des Vorformlings (14) und die dadurch bewirkte Volumenverminderung des Raumes verursacht wird.

3. Verfahren nach Anspruch 1, dadurch gekennzeichnet, daß das Druckgefälle dadurch entsteht, daß an dem Ende der Leitung (18), die dem freien Ende derselben, das sich im Raum zwischen Behälterwandung (32) und Vorformling (14) befindet, abgekehrt ist, Unterdruck angelegt wird.

4. Verfahren nach Anspruch 1, dadurch gekennzeichnet, daß zur Herstellung eines Druckgefälles die Maßnahmen gemäß den Ansprüchen 2 und 3 gleichzeitig angewendet werden.

5. Verfahren nach Anspruch 3 oder 4, dadurch gekennzeichnet, daß der Unterdruck bereits während des Einführens des Vorformlings (14) in den Behälter (10) wirksam ist.

6. Verfahren nach Anspruch 1, dadurch gekennzeichnet, daß der Vorformling (14) während des Einführens in den Behälter (10) unter geringem innerem Überdruck steht.

7. Verfahren nach Anspruch 1, dadurch gekennzeichnet, daß der Vorformling (14), nachdem er in den Behälter (10) eingebracht worden ist, eine Teilaufweitung derart erfährt, daß der Vorformling (14) mit Teilbereichen der Außenfläche seiner Wandung mit Teilbereichen der Innenfläche der Wandung (32) des Behälters in Kontakt kommt und der Unterdruck angelegt wird, nachdem der Vorformling (10) diese Teilaufweitung erfahren hat.

8. Verfahren nach Anspruch 7, dadurch gekennzeichnet, daß Unterdruck in dem dem Boden (20) des Behälters (10) zugekehrten Bereich (22) zwischen Behälterwandung (32) und Vorformling (14) wirksam ist, der durch die Teilaufweitung des Vorformlings (14) gegenüber der Öffnung (26) des Behälters (10) zumindest weitgehend abgedichtet ist.

9. Verfahren nach Anspruch 7, dadurch gekennzeichnet, daß Unterdruck in einem Bereich (28) zwischen Behälterwandung (32) und Vorformling (14) nahe dem Halsabschnitt (46) des Behälters (10) wirksam ist, der durch die Teilaufweitung des Vorformlings (14) gegenüber der Öffnung (26) des Behälters (10) zumindest weitgehend abgedichtet ist.

10. Verfahren nach Anspruch 1, dadurch gekennzeichnet, daß der Vorformling aus einem Extrusionskopf (12) direkt in den Behälter (10) hinein extrudiert wird.

11. Verfahren nach Anspruch 1, dadurch gekennzeichnet, daß der Vorformling (14) an seinem unteren Ende vor Beginn des Aufweitens verschlossen wird.

12. Verfahren nach Anspruch 11, dadurch gekennzeichnet, daß der Vorformling (14) durch Zusammenquetschen und Verschweißen seines freien Endes verschlossen wird und entstehendes Überschußmaterial ggf. vom Vorformling (14) abgetrennt wird.

13. Verfahren nach Anspruch 1, dadurch gekennzeichnet, daß in den Behälter (10) wenigstens ein als Leitung zum Ableiten von Luft dienender Rohr- oder Schlauchabschnitt (18) geringen Durchmessers eingelegt wird, der sich durch die Öffnung (26) des Behälters (10) bis zumindest in den am weitesten von der Öffnung (26) entfernten Bereich (22) hinein erstreckt, der im Verlauf des Aufweitens des Vorformlings (14) durch diesen gegenüber der Öffnung (26) des Behälters zumindest weitgehend abgeschlossen wird.

14. Verfahren nach Anspruch 13, dadurch gekennzeichnet, daß die Leitung (18) unter Aufrechterhaltung des Druckgefälles aus dem Behälter (10) herausgezogen wird, nachdem das Aufweiten des Vorformlings beendet worden ist.

15. Verfahren nach Anspruch 13, dadurch gekennzeichnet, daß beim Herausziehen der Leitung (18) diese an der Unterdruckquelle angeschlossen bleibt.

16. Verfahren nach Anspruch 13, dadurch gekennzeichnet, daß während des Herausziehens der Leitung (18) aus dem Behälter (10) der Innenraum des letzteren unter Überdruck gehalten wird.

17. Verfahren nach Anspruch 13, dadurch gekennzeichnet, daß die wenigstens eine Leitung (18) in Umfangsrichtung des Behälters (10) um 90° gegenüber einer durch den Mittelpunkt der Querschnittsfläche des Behälters (10) gehenden Ebene versetzt ist, parallel zu welcher die Schweißnaht (16) am unteren Ende des Vorformlings (14) verläuft.

18. Verfahren nach Anspruch 1 gekennzeichnet durch die Verwendung einer Leitung (18) mit etwa elliptischem Querschnitt, wobei die Längsachse der elliptischen Querschnittsfläche in der Betriebslage der Saugleitung (18) etwa parallel zu einer in diesem Bereich am Umfang des Behälters (10) anliegenden Tangente verläuft.

19. Verfahren nach Anspruch 18, dadurch gekennzeichnet, daß die dem Behälterinneren zugekehrte Begrenzungsfläche der Leitung (18) im Querschnitt eine Krümmung aufweist, die spiegelbildlich etwa der Krümmung der inneren Begrenzungsfläche der Wandung (32) des Behälters (10) entspricht.

20. Verfahren nach Anspruch 1 gekennzeichnet durch die Verwendung wenigstens einer Leitung (18), deren innerhalb des Behälters (10) befindlicher Abschnitt eine Wandung aufweist, die mit in Abständen voneinander angeordneten Durchbrechungen (24) versehen ist.

21. Verfahren nach Anspruch 20, dadurch gekennzeichnet, daß die Durchbrechungen (24) so angeordnet sind, daß sie von dem sich ausdehnenden Vorformling (14) nicht abgedeckt werden.

22. Verfahren nach Anspruch 1, dadurch gekennzeichnet, daß die Innenauskleidung durch eine zwischen der inneren Oberfläche der Behälterwandung (132) und der äußeren Oberfläche der Vorformlingswandung angeordnete Lage (242) aus adhäsivem Material an der Wandung (232) des Behälters angeheftet wird und die Intensität der Haftung so bemessen ist, daß die Innenauskleidung nach Entleeren des Behälters (210) aus diesem unter Lösen der Haftverbindung herausgenommen werden kann.

23. Verfahren nach Anspruch 22, dadurch gekennzeichnet, daß das Haftmittel (242) vor dem Einbringen des Vorformlings (214) auf der inneren Oberfläche der Behälterwandung (232) aufgebracht wird.

24. Verfahren nach Anspruch 23, dadurch gekennzeichnet, daß nur einzelne Bereiche der inneren Oberfläche der Behälterwandung (232) mit einer Beschichtung des Haftmittels (242) versehen sind.

25. Verfahren nach Anspruch 1, dadurch gekennzeichnet, daß in der Nähe der Öffnung (226) des Behälters (210) eine umlaufende, in sich geschlossene Schicht (252) eines Haftmittels aufgetragen wird und die Schicht (252) bei an ihr angeklebter Innenauskleidung eine Abdichtung zur Aufrechterhaltung eines zwischen Behälterwandung und Innenauskleidung vorhandenen Unterdrucks bildet.

26. Verfahren nach Anspruch 20 und/oder 25, dadurch gekennzeichnet, daß das an der inneren Oberfläche der Behälterwandung (232) aufgebrachte Haftmittel (242) mehrfach verwendet wird.

27. Verfahren nach Anspruch 22, dadurch gekennzeichnet, daß die Wandung des Vorformlings zweischichtig ausgebildet ist und die äußere Schicht aus einem Material besteht, welches beim Aufweiten des Vorformlings eine lösbare Haftung desselben am Behälter bewirkt.

28. Verfahren nach Anspruch 1 gekennzeichnet durch die Verwendung eines selbsttragenden Behälters (10).

29. Verfahren nach Anspruch 1, dadurch gekennzeichnet, daß nach Beendigung des Aufweitens des Vorformlings (14) innerhalb des Behälters der Vorformling (14) oberhalb der oberen Begrenzung des Behälters abgetrennt wird.

30. Verfahren nach Anspruch 1, dadurch gekennzeichnet, daß der überstehende Rand (250) des Vorformlings (214) über den die Öffnung (226) des Behälters (210) begrenzenden Halsabschnitt (246) gelegt wird und das den Behälter (210) verschließende Teil, z. B. ein Deckel, zur Erzielung eines dichten Verschlusses mit dem umgelegten Rand (250) des Vorformlings (114) zusammenwirkt.

31. Verfahren nach Anspruch 1, dadurch gekennzeichnet, daß vor dem endgültigen Aufweiten des Vorformlings zur Innenauskleidung in den Behälter (310; 410; 710) wenigstens eine im wesentlichen U-förmige Schlaufe (318; 418; 770) mit kleiner Querschnittsfläche aus flexiblem Material eingelegt wird, deren Länge so bemessen ist, daß spätestens nach dem Aufweiten des Vorformlings die Schlaufe (318; 418; 770) entlang der Kontur des Behälters (310; 410; 710) zwischen dessen Wandung und der Innenauskleidung verläuft und die beiden Enden der Schlaufe im Bereich der Öffnung derart enden, daß sie wenigstens bei entleertem Behälter in eine Position gebracht werden können, in welcher sie von Hand oder maschinell erfaßt werden können.

32. Verfahren nach Anspruch 31, dadurch gekennzeichnet, daß für die Schlaufe (318; 418) ein Schlauchabschnitt verwendet wird, der zum Ableiten von Luft aus dem Bereich zwischen Behälter (310; 410) und aufzuweitendem Vorformling dient.

33. Verfahren nach Anspruch 31, dadurch gekennzeichnet, daß für die Schlaufe (770) ein streifenförmiges Material verwendet wird.

34. Verfahren nach Anspruch 31, dadurch gekennzeichnet, daß die Schlaufe (318; 418; 770) zumindest auf Teilbereichen ihrer Oberfläche mit einer Klebstoffbeschichtung versehen ist und in diesen Bereichen an der Wandung des Behälters (310; 410; 710) und/oder an der Innenauskleidung haftet.

35. Verfahren nach Anspruch 31, dadurch gekennzeichnet, daß als Schlaufe (770) ein Klebeband verwendet wird.

36. Verfahren nach Anspruch 31, dadurch gekennzeichnet, daß zwei Schlaufen (418; 770) verwendet werden, die in zwei etwa um 90° gegeneinander versetzten Ebenen verlaufen.

37. Verfahren nach Anspruch 31, dadurch gekennzeichnet, daß die Enden (760) der wenigstens einen Schlaufe (770) an der Öffnung des Behälters nach außen geführt und an der Außenseite des die Öffnung begrenzenden Behälterteiles (764) angeheftet sind.

38. Verfahren nach Anspruch 1, dadurch gekennzeichnet, daß mehrere Klebeband-Abschnitte zwischen Behälter und Vorformling angeordnet und beim Aufweiten des letzteren in eine haftende Verbindung mit dem Behälter und der Innenauskleidung gebracht werden.

39. Verfahren nach Anspruch 1, dadurch gekennzeichnet, daß an die Innenauskleidung (564; 664) wenigstens ein Vorsprung angeformt wird, der es erlaubt, die Innenauskleidung an diesem Vorsprung zu erfassen, um die Innenauskleidung aus dem Behälter herauszuziehen.

40. Verfahren nach Anspruch 39, dadurch gekennzeichnet, daß zur Bildung eines derartigen Vorsprungs vor dem Aufweiten des Vorformlings zur Innenauskleidung (664) ein Einlegeteil (662) in den Behälter (610) eingebracht wird, welches der Innenauskleidung (664) an dieser Stelle eine Form gibt, die ein Erfassen der Innenauskleidung zum Herausziehen derselben aus dem Behälter (610) ermöglicht.

41. Verfahren nach Anspruch 40, dadurch gekennzeichnet, daß das Einlegeteil (662) mit einer Klebstoffbeschichtung versehen ist, die ein lösbares Anheften des Einlegeteils am Innenbehälter, insbesondere an dessen Boden (620), ermöglicht.

42. Verfahren nach Anspruch 39, dadurch gekennzeichnet, daß der Vorsprung (562) Teil eines Schlauchabschnittes (518) zum Ableiten der Luft oder an diesem angebracht ist.

43. Mit einer dünnwandigen Innenauskleidung versehener Behälter, dadurch gekennzeichnet, daß er nach dem Verfahren gemäß einem der Ansprüche 1 - 42 hergestellt ist.

44. Behälter nach Anspruch 43, dadurch gekennzeichnet, daß er aus thermoplastischem Kunststoff besteht.

45. Behälter nach Anspruch 43, dadurch gekennzeichnet, daß er selbsttragend ist.
